Europäisches Patentamt

European Patent Office

Office européen des brevets

(19)

(11) Veröffentlichungsnummer : **0 340 164 B1**

# (12) EUROPÄISCHE PATENTSCHRIFT

(45) Veröffentlichungstag der Patentschrift :
30.12.92 Patentblatt 92/53

(51) Int. Cl.⁵ : **B65B 23/12, B65G 47/38**

(21) Anmeldenummer : **89810272.8**

(22) Anmeldetag : **10.04.89**

(54) **Vorrichtung zum Umverteilen von Lebensmittelscheiben von einem ersten auf ein zweites Transportorgan.**

(30) Priorität : **29.04.88 CH 1604/88**

(43) Veröffentlichungstag der Anmeldung :
**02.11.89 Patentblatt 89/44**

(45) Bekanntmachung des Hinweises auf die Patenterteilung :
**30.12.92 Patentblatt 92/53**

(84) Benannte Vertragsstaaten :
**CH DE ES FR GB IT LI NL**

(56) Entgegenhaltungen :
**CH-A- 400 892**
**GB-A- 2 099 777**
**US-A- 2 806 579**

(73) Patentinhaber : **SIG Schweizerische Industrie-Gesellschaft CH-8212 Neuhausen am Rheinfall (CH)**

(72) Erfinder : **Walz, Theo Schwimmbadstrasse 432 CH-8213 Neunkirch (CH)**

(74) Vertreter : **Münch, Otto et al Patentanwalts-Bureau Isler AG Postfach 6940 CH-8023 Zürich (CH)**

EP 0 340 164 B1

## Beschreibung

Biskuits werden bei der Herstellung in einer grossen Anzahl von Kolonnen auf einem Förderband flachliegend durch einen Durchlauf-Backofen geführt. Nach dem Austritt aus dem Backofen werden die Biskuits gekühlt und über weitere Transporteinrichtungen den Verpackungsmaschinen zugeführt. Vor der Verpackungsmaschine werden z.B. abgezählte Stapel von Biskuits gebildet. Häufig treten Unterschiede zwischen den verschiedenen Kolonnen von Biskuits auf. So sind beispielsweise die Biskuits in den Randzonen oft stärker durchgebacken als die andern. Auch kommen Gewichtsunterschiede der Biskuits zwischen den einzelnen Kolonnen vor. Werden die Biskuits nun in kleinen Mengen verpackt, so sind oft in einer Verpackung nur stark und in einer andern Verpackung nur wenig durchgebackene Biskuits vorhanden und die Nettogewichte streuen relativ stark. Um dies zu verhindern, ist es vorteilhaft, wenn jeder zu verpackende Stapel Biskuits von sämtlichen Kolonnen des Förderbandes erhält. Zu diesem Zweck ist es aus der EP-A-230′293 bekannt, die vom Förderband angelieferten Biskuits mit Saugnäpfen zu ergreifen, die auf einem Saugförderband befestigt sind. Unterhalb dieses Saugförderbandes verläuft ein weiteres Förderband quer zur Transportrichtung des ersten Förderbandes. Wenn mehrere Reihen von mit den Saugnäpfen gehaltenen Biskuits über dem zweiten Förderband angelangt sind, werden durch einen Schieber die zugehörigen Saugnäpfe mit Blasluft verbunden und damit fallen die Biskuits auf das zweite Band. Die dabei auf dem zweiten Band gebildeten Kolonnen von Biskuits sind Reihen auf dem ersten Band. Jede Kolonne des zweiten Bandes enthält also Biskuits aus sämtlichen Kolonnen des ersten Bandes.

Mit der in EP-A-230′293 gezeigten Vorrichtung gelingt zwar das gewünschte Mischen der Kolonnen, doch setzt diese bekannte Vorrichtung voraus, dass die Biskuits auf dem ersten Förderband in regelmässigen Abständen angeliefert werden, was häufig nicht der Fall ist. Ausserdem wirbelt der Saug- und Blasbetrieb viel Staub auf, was unerwünscht ist.

Weitere Vorrichtungen zum Umverteilen von Biskuits sind in der US-PS 3,324,987 und in der CH-PS 657′829 beschrieben.

Aus der GB-A-2 099 777, die den Oberbegriff entspricht ist eine weitere Umverteilungsvorrichtung bekannt: An das Ende eines ersten Förderbandes schliessen mit gleicher Förderrichtung vier nebeneinander angeordnete Zwischenförderbänder unterschiedlicher Länge an. Am stromaufwärtigen Ende der Zwischenförderbänder ist ein vertikal beweglicher Anschlag vorhanden, der durch eine über die ganze erste Förderbandbreite spannende Lichtschranke betätigt wird. Die Zwischenförderbänder enden über einem Querförderband.

Auch diese Lösung funktioniert nur, wenn die Biscuits auf dem ersten Förderband mindestens angenähert reihenweise ausgerichtet angeliefert werden. Ausserdem hat sie gegenüber der Vorrichtung nach EP-A-230 293 den Nachteil, dass die Kolonnen auf dem Querförderband nur aus wenigen Kolonnen des ersten Förderbandes gebildet werden. Zwei dieser zweiten Kolonnen enthalten nur Biscuits von Randbereichen des ersten Förderbandes, die übrigen beiden zweiten Kolonnen nur solche des Mittelbereiches. Das Umverteilungsproblem ist damit nur unbefriedigend gelöst.

Der Erfindung liegt die Aufgabe zugrunde, eine Vorrichtung gemäss Oberbegriff des Anspruchs 1 derart weiterzubilden, dass sie auch bei unregelmässigen Abständen der Nahrungsmittelscheiben innerhalb der ersten Kolonnen betriebssicher arbeitet, und dass das Handhaben der Scheiben mit Saug- und Blasluft vermieden wird. Diese Aufgabe wird durch die kennzeichnenden Merkmale des Anspruchs 1 gelöst.

Nachfolgend wird ein Ausführungsbeispiel der Erfindung anhand der Zeichnung erläutert. Darin zeigt:

Fig. 1 einen schematischen Grundriss einer Transport- und Verpackungsanordnung,

Fig. 2 eine Draufsicht auf eine Umverteilungsvorrichtung,

Fig. 3 und Fig. 4 einen Längsschnitt durch die Vorrichtung nach Fig. 3 in zwei Betriebsstellungen,

Fig. 5 bis Fig. 8 die Uebergabestelle vom ersten Transportband in aufeinanderfolgenden Stellungen,

Fig. 9 eine Ansicht eines Details,

Fig. 10 einen Schnitt längs der Linie X - X in Fig. 9, und

Fig. 11 und Fig. 12 die den Figuren 9 und 10 entsprechende Darstellung bei abgesenkten Auflageplatten.

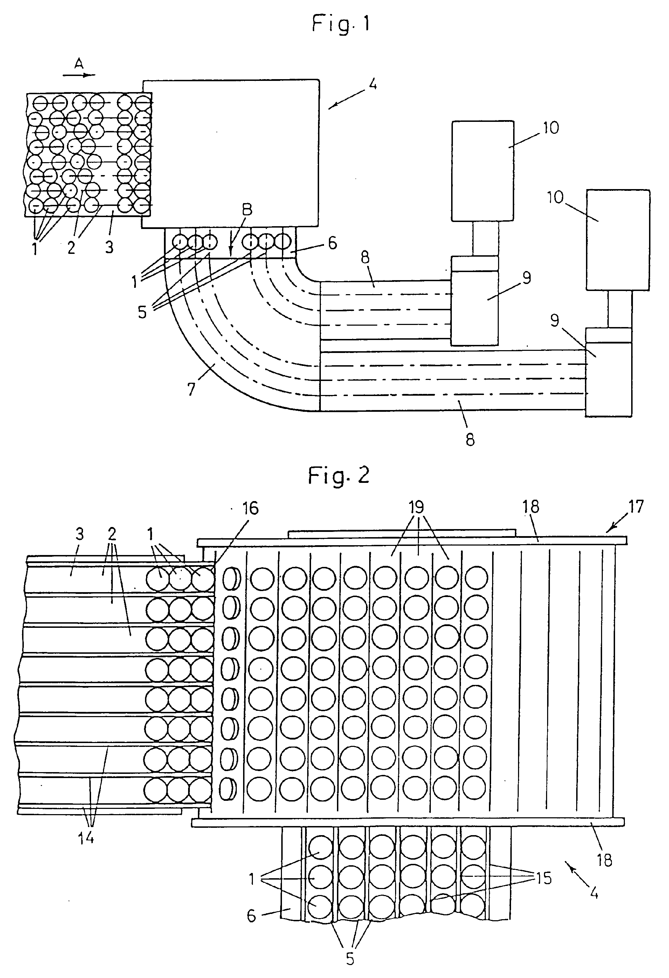

Bei der Anlage nach Fig. 1 werden aus einem nicht dargestellten Durchlauf-Backofen Biskuits 1 in einer ersten Anzahl von Kolonnen 2 auf einem Förderband 3 in Förderrichtung A einer Umverteilungsvorrichtung 4 angeliefert. Die Vorrichtung 4 bildet aus Reihen von Biskuits 1 des Bandes 3 eine zweite Anzahl zweiter Kolonnen 5 auf einem quer zum Band 3 in Richtung B laufenden zweiten Förderband 6. Vom Band 6 werden die Biskuits 1 einem Kurvenförderband 7 übergeben. Von diesem Band 7 gelangen die Biskuits 1 in Vibrationsförderrinnen 8, in welchen sie hochkant aufgestellt und flachseitig aneinander geschlossen werden. An die Rinnen 8 schliessen Portioniereinrichtungen 9 an, in welchen abgemessene Biskuitstapel gebildet werden. Diese werden schliesslich in Verpackungsmaschinen 10 verpackt.

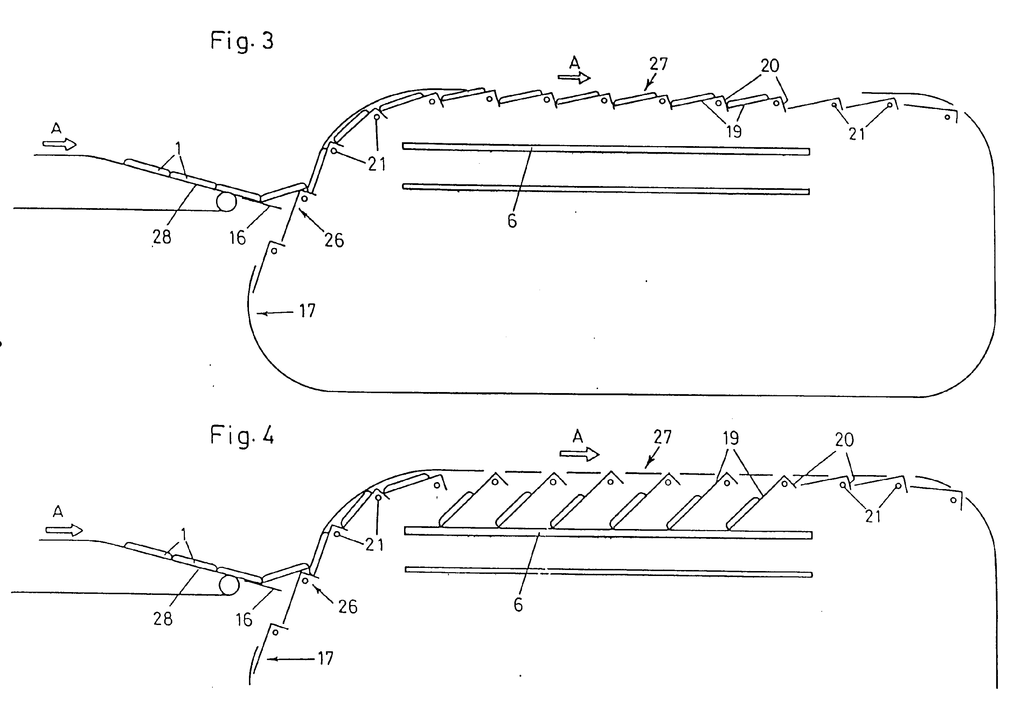

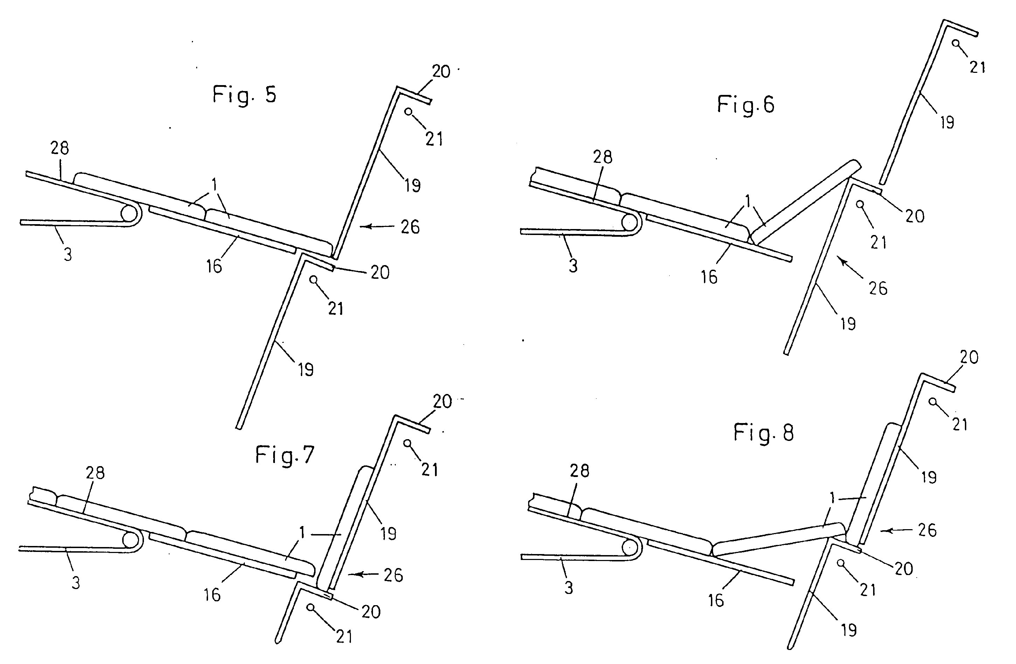

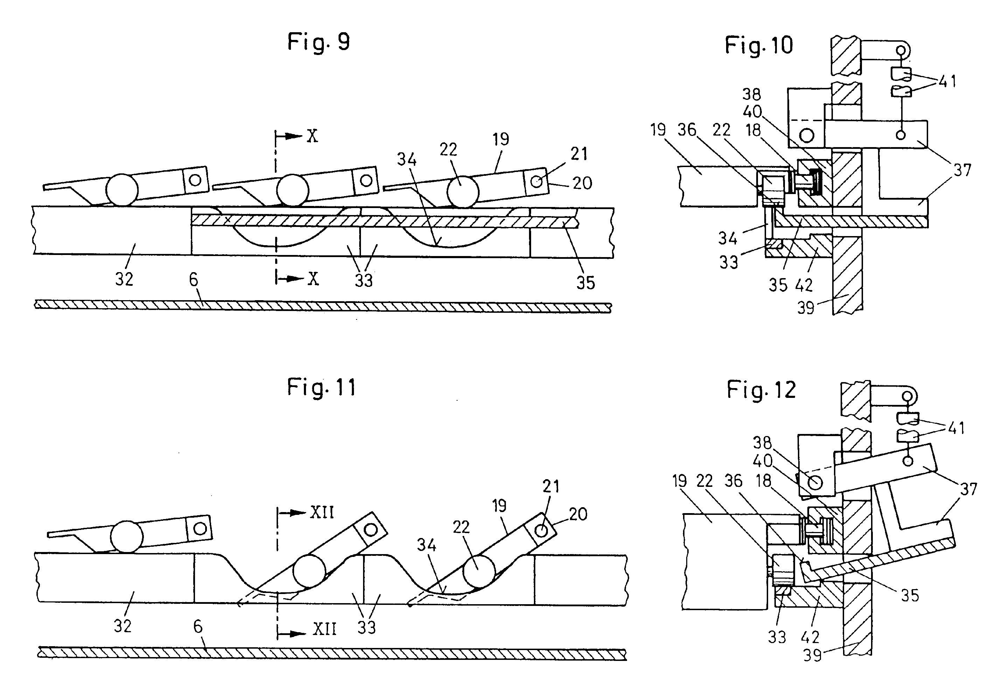

In Fig. 2 ist die Vorrichtung 4 in der Draufsicht dargestellt. Die einzelnen Kolonnen 2, 5 auf den Bändern 3, 6 sind durch Leitbleche 14, 15 voneinander getrennt. Stromaufwärts der Uebergabestelle an die Vorrichtung 4 werden die Biskuits 1 auf dem Band 3 gestaut, so dass die auf einem Uebergabeblech 16 befindlichen Biskuits 1 eine Reihe bilden und gegen ein umlaufendes Förderorgan 17 geschoben werden. Das Förderorgan 17 besteht aus zwei seitlichen, umlaufenden, endlosen Ketten 18 und an diesen Ketten 18 in regelmässigen Abständen angelenkten Auflageplatten 19 sowie nach aussen abstehenden Anschlägen 20 (Fig. 3 bis 8). Die Anschläge 20 bilden einstückige, um 90° abgewinkelte Fortsätze der Auflageplatten 19. Die Platten 19 sind an ihrem in Förderrichtung A vorderen Ende um horizontale Achsen 21 schwenkbar mit den Ketten 18 verbunden. Beabstandet von der Achse 21 hat jede Platte 19 mindestens auf einer Seite eine Führungsrolle 22 (Fig. 9), die auf einer Führungsschiene umläuft. Bei der Uebergabestelle vom Förderband 3 zum Förderorgan 17, d.h. benachbart zum Blech 16, laufen die Ketten 18 in einem ersten Abschnitt 26 schräg nach oben, anschliessend in einem zweiten Abschnitt 27 horizontal über das Förderband 6 hinweg. Im Abschnitt 26 sind die Platten 19 schräg nach oben geneigt und bilden zusammen mit den Anschlägen 20 im Längsschnitt gemäss Fig. 3 eine Sägezahnform. Im horizontalen Abschnitt 27 sind die Platten 19 in der Grundstellung (Fig. 3) leicht nach hinten unten geneigt, so dass die auf Ihnen aufliegenden Biskuits 1 an den nächstfolgenden Anschlägen 20 anliegen. Im Abschnitt 27 kann eine Anzahl von Platten 19 entsprechend der Anzahl der zu bildenden Kolonnen 5 gleichzeitig um ihre Achsen 21 nach unten verschwenkt werden (Fig. 4), so dass die auf ihnen aufliegenden Biskuits 1 auf das Förderband 6 gleiten. Um die Uebergabe der Biskuits vom Band 3 auf das Förderorgan 17 zu erleichtern, ist der letzte Abschnitt 28 des Bandes 3 und die Platte 16 leicht nach unten geneigt, und zwar mit einer Neigung entsprechend etwa der Neigung der Anschläge 20 im Abschnitt 26 der Ketten 18. In Fig. 5 bis 8 ist die Uebergabe der Biskuits 1 auf das Förderorgan 17 im Abschnitt 26 in aufeinanderfolgenden Schritten dargestellt. Die nach aussen abstehende Breite der Anschläge 20 ist wesentlich geringer als die Hälfte der Breite der Biskuits 1, so dass das vorderste Biskuit 1 durch den Anschlag 20 bloss an seinem vorderen Rand angehoben wird (Fig. 5). Das nachfolgende Biskuit 1 schiebt das angehobene Biskuit gegen die nächste Auflageplatte 19 (Fig. 6). Nun hebt der nächste Anschlag 20 den vorderen Rand des nächsten Biskuits 1 an (Fig. 7 und 8).

Der Mechanismus zum Absenken der Platten 19 im Abschnitt 27 ist in den Fig. 9 bis 12 dargestellt. Im horizontalen Abschnitt 27 hat die Führungsschiene 32, auf welcher die Rollen 22 abrollen, mehrere Einsätze 33. Die Anzahl der Einsätze 33 entspricht der maximalen Anzahl von Kolonnen 5, und ihre Länge entspricht dem Abstand benachbarter Achsen 21 oder Anschläge 20 voneinander. Mindestens einige aufeinanderfolgende der Einsätze 33 haben Senken 34, die mit den Leitblechen 15 ausgerichtet sind. Beim Durchfahren dieser Senken 34 werden die Rollen 22 mehrerer aufeinanderfolgender Platten 19 gleichzeitig abgesenkt, so dass diese Platten 19 geneigt werden (Fig. 11) und die auf ihnen liegenden Biskuits 1 auf das Förderband 6 gleiten. Nach diesem Vorgang muss das Förderorgan 17 ohne Absenken der Platten 19 um eine Strecke entsprechend der Anzahl Senken 34 multipliziert mit der Länge der Einsätze 33 weiterbewegt werden, bevor die Platten 19 im Abschnitt 27 wieder abgesenkt werden. Dazu ist neben den Einsätzen 33 eine zweite Schiene 35 angeordnet. Die Schiene 35 hat eine gerade durchlaufende Lauffläche 36. Sie ist an einem Hebel 37 um eine horizontale Achse 38 an einem Träger 39 schwenkbar gelagert. Am Träger 39 ist auch eine im Abschnitt 27 geradlinige, horizontale Führungsschiene 40 für die Kette 18 befestigt. Der Hebel 37 ist durch einen Pneumatikzylinder 41 aus der in Fig. 10 dargestellten Grundstellung in die zweite Stellung gemäss Fig. 12 schwenkbar. In der Grundstellung ist die Lauffläche 36 unmittelbar neben den Einsätzen 33, so dass die Rollen 22 mit ihren äusseren Hälften auf der zweiten Schiene 35 laufen und beim Ueberfahren der Senken 34 hochgehalten werden. In der zweiten Stellung der Schiene 35 (Fig. 12) laufen die Rollen 22 hingegen nur auf der Schiene 32 mit Ihren Einsätzen 33 und durchfahren die Senken 34. Im Betrieb richtet sich die Taktfrequenz der Betätigung des Zylinders 41 nach der Anzahl Kolonnen 5. Bei n Kolonnen 5 wird der Zylinder 41 jeweils nach einem vom Förderorgan 17 zurückgelegten Weg von n mal der Länge der Einsätze 33 betätigt.

Durch die beschriebene Ausbildung wird von einer beliebigen Anzahl Kolonnen 2 eine beliebige andere Anzahl Kolonnen 5 gebildet, wobei jede dieser zweiten Kolonnen 5 Biskuits von sämtlichen ersten Kolonnen 2 enthält. Dadurch werden in den Verpackungsmaschinen 10 die Streuungen der Nettogewichte der verpackten Stapel gering gehalten, und die verpackten Biskuits haben in allen Verpackungen etwa den gleichen durchschnittlichen Bräunungsgrad. Durch die beschriebene Vorrichtung 4 werden die Biskuits 1 schonend behandelt. Die Vorrichtung 4 funktioniert auch einwandfrei, wenn die Biskuits 1 auf dem Förderband 3 in unregelmässigen Abständen angeliefert werden. Die Anzahl der zweiten Kolonnen 5 ist beliebig wählbar, indem die Einsätze 33 gegen andere Einsätze mit gerader Lauffläche, also ohne Senke 34 ausgetauscht werden können. Dazu sind die Einsätze 33 lösbar auf einer Konsole 42 befestigt. Es ist mit der beschriebenen Vorrichtung 4 auch möglich, wie dies in Fig. 1 angedeutet ist, die Biskuits 1 von einem Zufuhrförderband 3 auf mehrere Verpackungsmaschinen 10 aufzuteilen und das Teilungsverhältnis im Betrieb der Kapazität der Verpackungsmaschinen 10 anzupassen. Beispielsweise kann eine von mehreren Verpackungsmaschinen 10 eine Reserveverpackungsmaschine sein, die normalerweise still steht und erst beim Ausfall einer andern in Betrieb gesetzt wird. In diesem Fall ist die Schiene 35 in Segmente von der Länge eines Vielfachen der Länge der Einsätze 33 unterteilt, wobei jedes Segment einen eigenen Betätigungszylinder 41 hat.

Das Querförderband 6 kann in beiden Richtungen antreibbar sein, wobei z.B. in der einen Richtung die Verpackungsmaschinen 10, in der Gegenrichtung z.B. ein Speicher oder eine Reserveverpackungsmaschine beschickt werden kann. Stoppt das Querförderband 6, so können mit dem Förderorgan 17 die Biskuits 1 in einen Abfallbehälter oder auf ein weiteres, in Richtung A transportierendes Speicherband gefördert werden.

**Patentansprüche**

1. Vorrichtung zum Umverteilen von in einer ersten Anzahl von ersten Kolonnen (2) auf einem ersten Transportorgan (3) flachliegend angelieferten Nahrungsmittelscheiben (1), insbesondere Biskuits, auf eine zweite Anzahl zweiter Kolonnen (5) von Scheiben (1) auf einem quer zum ersten Transportorgan (3) fördernden zweiten Transportorgan (6), wobei stromabwärts des ersten Transportorgans (3) mit gleicher Transportrichtung (A) ein Förderorgan (17) angeordnet ist, das die vom ersten Transportorgan (3) übernommenen Scheiben (1) reihenweise auf das zweite Transportorgan (6) fördert, dadurch gekennzeichnet, dass das Förderorgan (17) zwei parallele umlaufende Zugelemente (18) umfasst, dass zwischen den Zugelementen (18) Auflagen (19) für die Scheiben (1) sowie in regelmässigen Abständen nach aussen abstehende Anschläge (20) für die Hinterkanten der Scheiben (1) angeordnet sind, dass die Zugelemente (18) an der Uebergabestelle vom ersten Transportorgan (3) einen schräg nach oben verlaufenden ersten Abschnitt (26) aufweisen, derart, dass dort die Auflagen (19) nach schräg oben geneigt sind, dass ein an den ersten Abschnitt (26) anschliessender zweiter Abschnitt (27) der Zugelemente (18) annähernd horizontal quer über das zweite Transportorgan (6) verläuft, dass in diesem zweiten Abschnitt (27) annähernd gleichzeitig mehrere aufeinanderfolgende Auflagen (19) entsprechend der zweiten Anzahl von zweiten Kolonnen (5) nach unten schwenkbar sind, so dass die auf ihnen aufliegenden Scheiben (1) auf das zweite Transportorgan (6) gleiten, und dass die über die Auflagen (19) vorstehende Höhe der Anschläge (20) geringer ist als die Hälfte des Abstandes aufeinander folgender Anschläge (20).

2. Vorrichtung nach Anspruch 1, dadurch gekennzeichnet, dass die Anzahl von annähernd gleichzeitig verschwenkbaren Auflagen (19) einstellbar ist.

3. Vorrichtung nach Anspruch 1 oder 2, dadurch gekennzeichnet, dass die Auflagen (19) als Platten ausgebildet sind, die an ihrem in Förderrichtung vorderen Ende mit den Zugelementen (18) um je eine horizontale Schwenkachse (21) schwenkbar verbunden sind und auf mindestens einer Seite beabstandet von der Schwenkachse (21) eine Führungsrolle (22) tragen.

4. Vorrichtung nach Anspruch 3, dadurch gekennzeichnet, dass die Führungsrollen (22) im zweiten Abschnitt (27) der Zugelemente (18) auf einer ersten Schiene (32) geführt sind, die mehrere Senken (34) aufweist, wobei der Abstand der Senken (34) voneinander dem Abstand der Anschläge (20) voneinander entspricht, und dass neben der ersten Schiene (32) eine durch ein Betätigungselement (41) zwischen zwei Stellungen bewegbare gerade zweite Schiene (35) angeordnet ist, derart, dass die Rollen (22) in der ersten Stellung der zweiten Schiene (35) auf dieser rollen und die Auflagen (19) oben halten und in der zweiten Stellung der zweiten Schiene (35) auf der ersten Schiene (32) rollen und beim Durchfahren der Senken (34) die Auflagen (19) geneigt werden.

5. Vorrichtung nach Anspruch 4, dadurch gekennzeichnet, dass die erste Schiene (32) mehrere, je mindestens eine Senke (34) enthaltende Teilstücke (33) enthält, die gegen andere Teilstücke (33) mit weniger oder ohne Senken (34) austauschbar sind.

6. Vorrichtung nach einem der Ansprüche 1 bis 5, dadurch gekennzeichnet, dass die Anschläge (20) abgewinkelte, einstückige Fortsätze der plattenförmigen Auflagen (19) sind.

7. Vorrichtung nach einem der Ansprüche 1 bis 6, dadurch gekennzeichnet, dass jede Auflage (19) mit dem anschliessenden Anschlag (20) einen annähernd rechten Winkel bildet.

**Claims**

1. A device for redistributing food discs (1), more particularly biscuits, supplied lying flat in a first number of first columns (2) on a first transportation device (3), to form a second number of second columns (5) of discs (1) on a second transportation device (6) conveying transversely to the first transportation device (3), a conveyor device (17) being arranged downstream of the first transportation device (3) and having the same direction of conveyance A, said conveyor device (17) transferring the discs (1) taken from the first transportation device (3) in rows on to the second transportation device (6), characterised in that the conveyor device (17) comprises two parallel rotating traction elements (18), supports (19) for the discs (1) are arranged between the traction elements (18) as well as outwardly projecting abutments (20) spaced uniformly apart for the rear edges of the discs (1), the traction elements (18) comprise at the transfer site from the first transportation device (3) a first zone (26) extending obliquely upwards in such a manner that the supports (19) are upwardly inclined in said zone, adjoining the first zone (26) a second zone (27) of the traction elements (18) extends approximately horizontally over the second transportation device (6), in said second zone (27) a plurality of successive supports (19) corresponding to the second number of second columns (5) can be pivoted downwards approximately simultaneously, so that the discs (1) arranged thereon slide on to the second transportation device (6), and the height of the abutments (20) projecting beyond the supports (19) is less than half the distance between successive abutments (20).

2.  A device according to claim 1, characterised in that the number of supports (19) which can be approximately simultaneously pivoted is variable.

3.  A device according to claim 1 or 2, characterised in that the supports (19) are designed as plates, which at their front end in the conveying direction are connected with the traction elements (18) so as to be pivotable about a horizontal pivot axis (21) in each case and at least on one side at a distance from the pivot axis (21) support a guide roller (22).

4.  A device according to claim 3, characterised in that the guide rollers (22) are guided in the second zone (27) of the traction elements (18) on a first rail (32) comprising a plurality of depressions (34), the distance between the depressions (34) corresponding to the distance between the abutments (20), and adjacent the first rail (32) a straight second rail (35) displaceable by means of an actuating element (41) between two positions is arranged in such a manner that the rollers (22) in the first position of the second rail (35) run upon said second rail and hold the supports (19) in the elevated position and in the second position of the second rail (35) travel on the first rail (32) and as they travel over the depressions (34) the supports (19) are inclined.

5.  A device according to claim 4, characterised in that the first rail (32) comprises a plurality of partial sections (33), each having at least one depression (34), the partial sections being exchangeable for other partial sections (33) having fewer or no depressions (34).

6.  A device according to one of claims 1 to 5, characterised in that the abutments (20) are angled, integral continuations of the plate-shaped supports (19).

7.  A device according to one of claims 1 to 6, characterised in that each support (19) forms an approximate right angle with the adjoining abutment (20).

**Revendications**

1.  Dispositif pour la redistribution de produits alimentaires en forme de disque (1), en particulier de biscuits, délivrés à plat en un premier nombre de premières colonnes (2) sur un premier organe de transport (3), en un second nombre de secondes colonnes (5) de disques (1) sur un second organe de transport (6) qui les entraîne transversalement par rapport au premier organe de transport (3), dispositif dans lequel il est disposé, en aval du premier organe de transport (3), avec la même direction de transport (A), un organe transporteur (17) qui entraîne par rangées sur le second organe de transport (6) les disques (1) reçus du premier organe de transport (3), caractérisé en ce que l'organe transporteur (17) comprend deux éléments de traction (18) qui tournent parallèlement, en ce qu'il est disposé, entre les éléments de traction (18), des surfaces d'appui (19) pour les disques (1), ainsi que des butées (20) en saillie vers l'extérieur, à intervalles réguliers, pour les bords arrière des disques (1), en ce que les éléments de traction (18) présentent, au point de déversement du premier organe transporteur (3), un premier brin (26) qui s'étend obliquement vers le haut, de sorte qu'à ce niveau, les surfaces d'appui (19) soient inclinées obliquement vers le haut, en ce qu'un deuxième brin (27) des éléments de traction (18), faisant suite au premier brin, s'étend à peu près horizontalement et transversalement au-dessus du second organe de transport (6), en ce que, dans ce deuxième brin (27), plusieurs surfaces d'appui (19) successives, correspondant au second nombre de secondes colonnes (5), peuvent pivoter vers le bas à peu près en même temps, de sorte que les disques (1) qui reposent sur elles glissent sur le second organe de transport (6), et en ce que la hauteur des butées (20), en saillie sur les surfaces d'appui (19), est inférieure à la moitié de l'intervalle entre des butées (20) successives.

2. Dispositif selon la revendication 1, caractérisé en ce que le nombre de surfaces d'appui (19) qui peuvent pivoter à peu près en même temps est réglable.

3. Dispositif selon la revendication 1 ou 2, caractérisé en ce que les surfaces d'appui (19) sont réalisées sous forme de plaques qui sont articulées chacune sur les éléments de traction (18), par leur extrémité avant dans le sens du transport, de façon à pouvoir pivoter autour d'un axe horizontal de pivotement (21), et qui portent, d'un côté au moins, un galet de guidage (22) à distance de l'axe de pivotement (21).

4. Dispositif selon la revendication 3, caractérisé en ce que, dans le deuxième brin (27) des éléments de traction (18), les galets de guidage (22) sont guidés sur un premier rail (32) qui présente plusieurs creux (34), la distance mutuelle des creux (34) correspondant à la distance mutuelle des butées (20), et en ce qu'à côté du premier rail (32), il est disposé un second rail rectiligne (35) qui peut être déplacé entre deux positions par un élément d'actionnement (41), de telle sorte que, dans la première position du second rail (35), les galets (22) roulent sur celui-ci et maintiennent en haut les surface d'appui (19) et que, dans la seconde position du second rail (35), ils roulent sur le premier rail (32) et qu'au passage dans les creux (34), les surfaces d'appui (19) soient inclinées.

5. Dispositif selon la revendication 4, caractérisé en ce que le premier rail (32) comprend plusieurs segments partiels (33) qui contiennent chacun au moins un creux (34) et qui peuvent être échangés contre d'autres segments partiels (33) comportant moins de creux (34) ou dépourvus de ceux-ci.

6. Dispositif selon l'un quelconque des revendications 1 à 5, caractérisé en ce que les butées (20) sont des prolongements coudés des surfaces d'appui en forme de plaque (19), d'une seule pièce avec celles-ci.

7. Dispositif selon l'un quelconque des revendications 1 à 6, caractérisé en ce que chaque surface d'appui (19) forme un angle approximativement droit avec la butée (20) qui lui fait suite.

Fig. 1

Fig. 2

Fig. 3

EP 0 340 164 B1

Fig. 4

Fig. 5

Fig. 6

Fig. 7

Fig. 8

EP 0 340 164 B1

Fig.10

Fig.12

Fig.9

Fig.11